# EUROPEAN PATENT APPLICATION

(11) **EP 2 960 131 A2**
(43) Date of publication of application: **30.12.2015**
(21) Application number: 15172480.4
(22) Date of filing: 17.06.2015
(51) Int. Cl.: B60W 50/14, B60W 30/10, B60W 30/12, G06K 9/00

(54) **WARNING DEVICE AND TRAVEL CONTROL DEVICE**

(30) Priority: 23.06.2014 JP 2014128461
(71) Applicant: Toyota Jidosha Kabushiki Kaisha, Toyota-shi, Aichi 471-8571 (JP)
(72) Inventor: FUJISHIRO, Ryo, Toyota-shi, Aichi 471-8571 (JP)
(74) Representative: TBK

(57) **Abstract**

A warning device includes a distance acquisition unit (21) that acquires a lane width direction distance between two lane boundary lines of a driving lane and a vehicle; a speed acquisition unit (22) that acquires a lane width direction speed of the vehicle toward the lane boundary lines; a safety threshold setting unit (27) that sets a safety threshold for allowing that the lower the lane width direction speed is toward the lane boundary lines, the smaller the lane width direction distance is; and a warning unit (28) that warns a driver of the vehicle when the lane width direction distance is smaller than the safety threshold, wherein the safety threshold setting unit (27) sets the safety threshold based on a history of the lane width direction distance and the lane width direction speed for a traveling environment of the vehicle.

## Description

### BACKGROUND OF THE INVENTION

### 1. Field of the Invention

The present invention relates to a warning device and a travel control device.

### 2. Description of Related Art

Japanese Patent Application Publication No. 2010-058739 (JP 2010-058739 A) discloses a lane departure warning device that warns a driver when the vehicle begins to move out of the two lane boundary lines of the driving lane. The lane departure warning device disclosed in Japanese Patent Application Publication No. 2010-058739 (JP 2010-058739 A) includes a departure determination unit that determines whether the vehicle will leave its lane boundary lines, a warning unit that outputs a warning sound, and a warning time control unit that controls the output time of the warning unit based on the determination result of the departure determination unit. The departure determination unit calculates the distance between each of the lane boundary lines and the vehicle based on an image obtained by a white line detection sensor and determines whether the vehicle will leave its lane boundary lines based on a change in the distance.

### SUMMARY OF THE INVENTION

The distance between the lane boundary lines and a vehicle during the travel of the vehicle depends on a driver. This means that, if a uniform condition for warning a driver of departure from its lane boundary lines is established based on the distance between the lane boundary lines and the vehicle, the time for giving a warning to the driver may be too early or too late. The warning is sometimes output so early or so late that the driver feels something is wrong. Thus, there is a need to output a warning with right timing and to perform travel control to reduce driver's feeling that something is wrong.

A warning device in a first aspect of the present invention includes a distance acquisition unit that acquires a lane width direction distance between two lane boundary lines of a driving lane and a vehicle; a speed acquisition unit that acquires a lane width direction speed of the vehicle toward the lane boundary lines; a safety threshold setting unit that sets a safety threshold for allowing that the lower the lane width direction speed is toward the lane boundary lines, the smaller the lane width direction distance is; and a warning unit that warns a driver of the vehicle when the lane width direction distance is smaller than the safety threshold, wherein the safety threshold setting unit sets the safety threshold based on a history of the lane width direction distance and the lane width direction speed for a traveling environment of the vehicle.

According to the aspect described above, the safety threshold setting unit sets a safety threshold for allowing that the lower the lane width direction speed is toward the lane boundary lines, the smaller the lane width direction distance is. The warning unit warns the driver of the vehicle when the lane width direction distance is smaller than the safety threshold. Therefore, this warning unit, which allows a smaller lane width direction distance when the lane width direction speed is lower, reduces annoyance to the driver. In addition, the safety threshold setting unit sets the safety threshold based on the history of the lane width direction distance and the lane width direction speed for the traveling environment of the vehicle. Therefore, this warning unit can set a safety threshold based on the driver's travel history according to the traveling environment such as a curve, thus giving a warning that reduces driver's feeling that something is wrong.

The warning device described above may further include a lane width acquisition unit that acquires a distance between the two lane boundary lines, wherein the safety threshold setting unit may set the safety threshold that is smaller as the distance is smaller.

The driver must drive nearer to the lane boundary line during driving as the distance between the two lane boundary lines is smaller to avoid a pedestrian. To address this problem, this warning device causes the safety threshold setting unit to set a smaller safety threshold as the distance between the two lane boundary lines is smaller, reducing annoyance to the driver of the vehicle.

The warning device described above may further include a curvature acquisition unit that acquires a curvature of the driving lane, wherein the safety threshold setting unit may set the safety threshold that is smaller as the curvature is larger.

The driver sometimes drives nearer to the lane boundary line on the inner side of a curve as the curvature of the driving lane is larger. To address this problem, this warning device causes the safety threshold setting unit to set a smaller safety threshold as the curvature of the driving lane is larger, reducing annoyance to the driver of the vehicle.

A travel control device in a second aspect of the present invention includes a distance acquisition unit that acquires a lane width direction distance between two lane boundary lines of a driving lane and a vehicle; a speed acquisition unit that acquires a lane width direction speed of the vehicle toward the lane boundary lines; a safety threshold setting unit that sets a safety threshold for allowing that the lower the lane width direction speed is toward the lane boundary lines, the smaller the lane width direction distance is; and a travel control unit that controls a travel of the vehicle so that the lane width direction distance becomes equal to or larger than the safety threshold when the lane width direction distance is smaller than the safety threshold, wherein the safety threshold setting unit sets the safety threshold based on a history of the lane width direction distance and the lane width direction speed for a traveling environment of the vehicle.

According to this configuration, the safety threshold setting unit sets a safety threshold for allowing that the lower the lane width direction speed is toward the lane boundary lines, the smaller the lane width direction distance is. The travel control unit controls the travel of the vehicle so that the lane width direction distance becomes equal to or larger than the safety threshold when the lane width direction distance is smaller than the safety threshold. Therefore, this travel control device, which allows a smaller lane width direction distance when the lane width direction speed is lower, reduces annoyance to the driver. In addition, the safety threshold setting unit sets the safety threshold based on the history of the lane width direction distance and the lane width direction speed for the traveling environment of the vehicle. This allows the travel control device to set a safety threshold based on the driver's travel history according to the traveling environment such as a curve, thus performing travel control that reduces driver's feeling that something is wrong.

According to one aspect and other aspects of the present invention, driver's feeling of inadequacy can be reduced.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram showing a travel support device in an embodiment;
FIG. 2 is a top view showing the definition of the lane width direction speed of a vehicle toward a lane boundary line and the lane width direction distance between the vehicle and the lane boundary line in the embodiment;
FIG. 3 is a flowchart showing the warning operation for the driver of a vehicle in the warning mode of the travel support device shown in FIG. 1;
FIG. 4 is a graph showing the safety threshold of the lane width direction distance that is set based on a lane width direction speed, a driver's reaction speed, and an arbitrary constant;
FIG. 5 is a graph showing the distribution of statistical data on the lane width direction speed and the lane width direction distance in the driving history of an unspecified number of drivers;
FIG. 6 is a top view showing driver's driving tendency at a sharp curve;
FIG. 7 is a top view showing driver's driving tendency when a pedestrian is present in a lane where the distance between the lane boundary lines is narrow;
FIG. 8 is a diagram showing a change in the curve C1 when the curvature of a curve is increased or the distance between the lane boundary lines is decreased;
FIG. 9A to FIG. 9C are graphs showing the safety thresholds that are set using the history of the lane width direction distance between a vehicle and lane boundary lines in various traveling environments of the vehicle in the warning mode;
FIG. 10 is a flowchart showing the vehicle travel control operation in the travel control mode of the travel support device shown in FIG. 1; and
FIG. 11A to FIG. 11C are graphs showing the safety thresholds that are set using the history of the lane width direction distance between a vehicle and lane boundary lines in various traveling environments of the vehicle in the travel control mode.

### DETAILED DESCRIPTION OF EMBODIMENTS

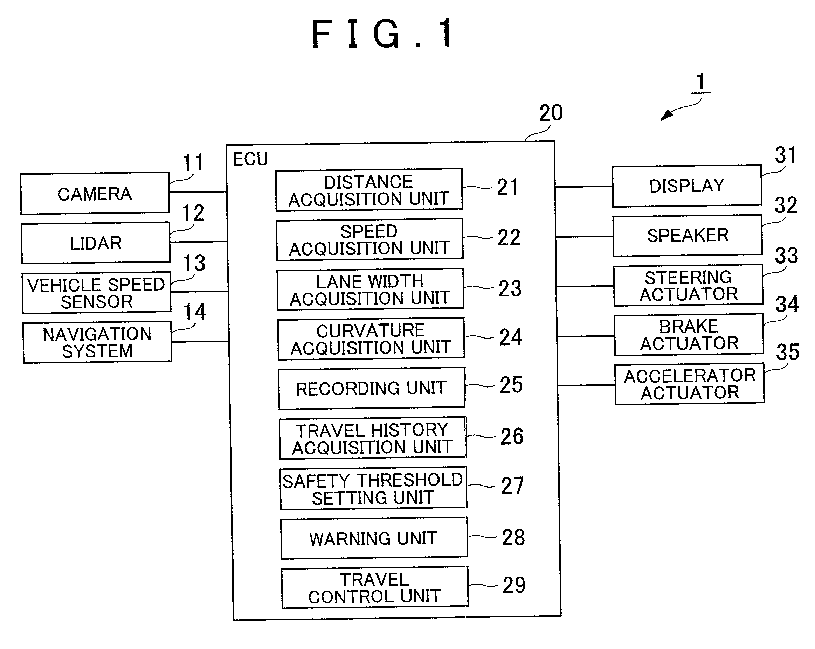

A warning device and a travel control device in an embodiment of the present invention will be described below in detail with reference to the drawing. A travel support device 1 shown in FIG. 1 is a device that prevents a vehicle from moving out of the two lane-boundary lines of a driving lane. The travel support device 1 switches the mode between a warning mode and a travel control mode as necessary. In the warning mode, the travel support device 1 functions as a warning device that warns the vehicle's driver when the lane width direction distance between one of the two lane boundary lines and the vehicle is small. In the travel control mode, the travel support device 1 functions as a travel control device that controls the travel of the vehicle so that the lane width direction distance is increased when the lane width direction distance between one of the two lane boundary lines and the vehicle is small.

The travel support device 1 includes a camera 11, a lidar 12, a vehicle speed sensor 13, a navigation system 14, an ECU 20, a display 31, a speaker 32, a steering actuator 33, a brake actuator 34, and an accelerator actuator 35.

The camera 11 is an imaging device that captures the area in front of the vehicle. The camera 11 is a CCD camera or a CMOS camera. The camera 11 captures the road, on which the vehicle travels, to recognize the two lane-boundary lines of the driving lane in which the vehicle travels. The output from the camera 11 is input to the ECU 20, and the image captured by the camera 11 is acquired by the ECU 20.

The lidar 12 directs a laser beam to the area in front of the vehicle in pulse form and measures the reflected light from the road surface to acquire the information for recognizing the lane boundary lines. Because the reflectance of a laser beam differs between the lane boundary lines and the road surface on which there is no lane boundary line, the lane boundary lines can be recognized using the difference in the light intensity of the reflected light. The lidar 12, which emits a laser beam, is less affected by natural light. The output from the lidar 12 is input to the ECU 20, and the information on the reflected light from the road surface, acquired by the lidar 12, is acquired by the ECU 20. The travel support device 1 in this embodiment is not required to have both, but may have one, of the camera 11 and the lidar 12. In addition, instead of the lidar 12, a millimeter wave radar may also be used.

The vehicle speed sensor 13 is a sensor that detects the rotation speed of the wheels of the vehicle as a pulse signal to measure the speed in the vehicle traveling direction. The output from the vehicle speed sensor 13 is input to the ECU 20, and the pulse signal detected by the vehicle speed sensor 13 is acquired by the ECU 20.

The navigation system 14 is used to acquire the shape of the road on which the vehicle travels. The navigation system 14 is configured by a Global Positioning System (GPS), an acceleration sensor, a gyro sensor, and a database in which map information is accumulated. The navigation system 14 measures the position of the vehicle based on the information obtained from the GPS, acceleration sensor, gyro sensor, and the vehicle speed sensor 13. The navigation system 14 acquires the distance between the two lane boundary lines on the road on which the vehicle travels and the curvature of the driving lane from the map information and the vehicle's position. The output from the navigation system 14 is input to the ECU 20, and the information acquired by the navigation system 14, that is, the information on the distance between the two lane boundary lines and on the curvature of the driving lane, is acquired by the ECU 20.

The electronic control unit (ECU) 20 is a computer that controls the travel support device 1. The ECU 20 includes a Central Processing Unit (CPU), memories such as a Read Only Memory (ROM) and a Random Access Memory (RAM), and an input/output interface. The ECU 20 includes a distance acquisition unit 21, a speed acquisition unit 22, a lane width acquisition unit 23, a curvature acquisition unit 24, a recording unit 25, a travel history acquisition unit 26, a safety threshold setting unit 27, a warning unit 28, and a travel control unit 29. The hardware of the ECU 20 operates according to the predetermined program to function as the distance acquisition unit 21, speed acquisition unit 22, lane width acquisition unit 23, curvature acquisition unit 24, recording unit 25, travel history acquisition unit 26, safety threshold setting unit 27, warning unit 28, and travel control unit 29.

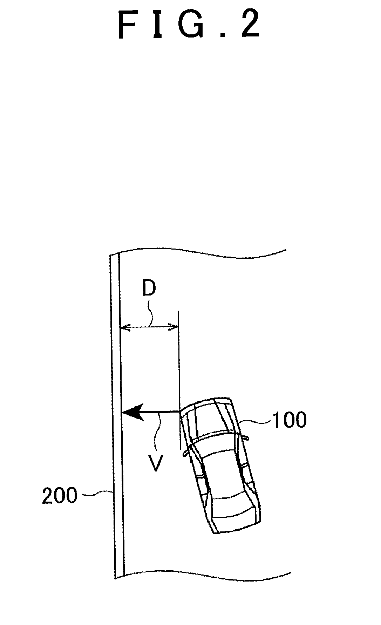

The distance acquisition unit 21 acquires the lane width direction distance between one of the two lane boundary lines of the driving lane and the vehicle based on the information about the image captured by the camera 11 or about the reflected light from the road surface acquired by the lidar 12. In this embodiment, the lane width direction distance D between a lane boundary line 200 and a vehicle 100 is the distance, in the direction at right angles to the lane boundary line 200, between the lane boundary line 200 and the surface of the vehicle 100 as shown in FIG. 2. The direction at right angles to the lane boundary line 200 includes a direction not only 90 degrees, but also 80 to 100 degrees, to the lane boundary line 200 in plan view. The distance acquisition unit 21 may acquire the lane width direction distance D by calculating "lane width direction distance D = h × sinθ", where h is the distance between the lane boundary line 200 and the vehicle 100 in the traveling direction of the vehicle 100 and θ is the angle between the traveling direction of the vehicle 100 and the lane boundary line 200.

The speed acquisition unit 22 acquires the lane width direction speed of the vehicle toward the lane boundary line 200, based on the information about the image captured by the camera 11 or about the reflected light from the road surface acquired by the lidar 12. In this embodiment, the lane width direction speed V between the lane boundary line 200 and the vehicle 100 is the speed, in the direction at right angles to the lane boundary line 200, at which the vehicle 100 approaches the lane boundary line 200 as shown in FIG. 2. The speed acquisition unit 22 can calculate the lane width direction speed V by differentiating the lane width direction distance D, acquired by the distance acquisition unit 21, with respect to time.

The speed acquisition unit 22 may also acquire the lane width direction speed V as follows. That is, the speed acquisition unit 22 acquires the angle between the traveling direction of the vehicle 100 and the lane boundary line 200 based on the information about the image captured by the camera 11 or about the reflected light from the road surface acquired by the lidar 12 and, then, acquire the lane width direction speed V based on the vehicle speed of the vehicle 100 acquired by the vehicle speed sensor 13.

The lane width acquisition unit 23 acquires the distance between the two lane boundary lines. The lane width acquisition unit 23 can acquire the distance between the two lane boundary lines 200 based on the information about the image captured by the camera 11 or about the reflected light from the road surface acquired by the lidar 12. The lane width acquisition unit 23 can also acquire the distance between the two lane boundary lines 200 acquired by the navigation system 14.

The curvature acquisition unit 24 acquires the curvature of the driving lane. The curvature acquisition unit 24 can also acquire the curvature of the driving lane as the curvature radius. The curvature acquisition unit 24 acquires the curvature of the driving lane from the curvature of the two lane boundary lines 200, guardrail, or curbstones based on the information about the image captured by the camera 11 or about the reflected light from the road surface acquired by the lidar 12. The curvature acquisition unit 24 may also acquire the curvature of the driving road based on the shape of the road, on which the vehicle 100 travels, acquired by the navigation system 14.

The recording unit 25 records the lane width direction distance D, acquired by the distance acquisition unit 21, and the lane width direction speed V, acquired by the speed acquisition unit 22, when the driver drives the vehicle 100. In addition, as the traveling environment, the recording unit 25 records the distance between the two lane boundary lines 200, acquired by the navigation system 14, and the curvature of the driving lane, acquired by the curvature acquisition unit 24, in association with the lane width direction distance D and the lane width direction speed V described above. In this embodiment, the traveling environment means the distance between the two lane boundary lines and the curvature of the driving lane. The traveling environment may include the slope of the driving lane, the weather, the pedestrians around the driving lane, and the number of obstacles such as bicycles and motorcycles. In this case, the recording unit 25 records this traveling environment information in association with the lane width direction distance D and lane width direction speed V.

More specifically, the recording unit 25 is configured by a recording medium such as a hard disk. The recording unit 25 need not have a recording medium within the travel support device 1. For example, the recording unit 25 may record the information about the lane width direction distance D, lane width direction speed V, distance between the two lane boundary lines 200, and curvature of the driving lane into a database in an information processing center, external to the vehicle 100, via wireless communication.

The travel history acquisition unit 26 acquires the lane width direction distance D and the lane width direction speed V, which are associated with the distance between the two lane boundary lines 200 and the curvature of the driving lane, from the recording unit 25. If the recording unit 25 has recorded this information in a database in an information processing center external to the vehicle 100, the travel history acquisition unit 26 can acquire the lane width direction distance D and the lane width direction speed V, which are associated with the distance between the two lane boundary lines 200 and the curvature of the driving lane, from that database.

The safety threshold setting unit 27 sets a safety threshold for allowing that the lower the lane width direction speed V is toward the lane boundary line 200, the smaller the lane width direction distance D is. In the warning mode, the safety threshold is a threshold indicating a condition for the warning unit 28 to warn the driver of the vehicle 100. In the travel control mode, the safety threshold is a threshold indicating a condition for the travel control unit 29 to start travel control for preventing the vehicle 100 from leaving the lane. As will be described later, the safety threshold setting unit 27 sets a safety threshold based on the history of the lane width direction distance D and the lane width direction speed V for the traveling environment of the vehicle 100.

The warning unit 28 warns the driver of the vehicle 100 if the lane width direction distance D is smaller than the safety threshold, which is set by the safety threshold setting unit 27, in the warning mode. The warning unit 28 warns the driver of the vehicle 100 with an image displayed on the display 31 or with a sound, such as a warning sound, output from the speaker 32. In some other cases, the warning unit 28 warns the driver of the vehicle 100 by giving a reaction force to the steering wheel, brake pedal, or accelerator pedal via the steering actuator 33, brake actuator 34, or accelerator actuator 35, respectively.

The travel control unit 29 controls the travel of the vehicle 100 in the travel control mode so that the lane width direction distance D becomes equal to or larger than the safety threshold if the lane width direction distance D is smaller than the safety threshold that is set by the safety threshold setting unit 27. The travel control unit 29 controls the travel of the vehicle 100 so that the lane width direction distance D becomes equal to or larger than the safety threshold by changing the steering angle, brake amount, or acceleration amount of the vehicle 100 via the steering actuator 33, brake actuator 34, or accelerator actuator 35, respectively. The safety threshold is a value for allowing that the lower the lane width direction speed V is toward the lane boundary line 200, the smaller the lane width direction distance D is. Therefore, the travel control unit 29 can also control the travel of the vehicle 100 so that the lane width direction distance D becomes equal to or larger than the safety threshold by changing the brake amount or the acceleration amount of the vehicle 100.

The display 31 warns the driver of the vehicle 100 by displaying an image in response to a command from the warning unit 28. The speaker 32 warns the driver of the vehicle 100 by outputting a sound, such as a warning sound, in response to a command from the warning unit 28.

The steering actuator 33, brake actuator 34, or accelerator actuator 35 warns the driver of the vehicle 100 by giving a reaction force to the steering wheel, brake pedal, or accelerator pedal, respectively, in response to a command from the warning unit 28. The steering actuator 33, brake actuator 34, or accelerator actuator 35 also controls the travel of the vehicle 100 by changing the steering angle, brake amount or the acceleration amount of the vehicle 100 in response to a command from the travel control unit 29.

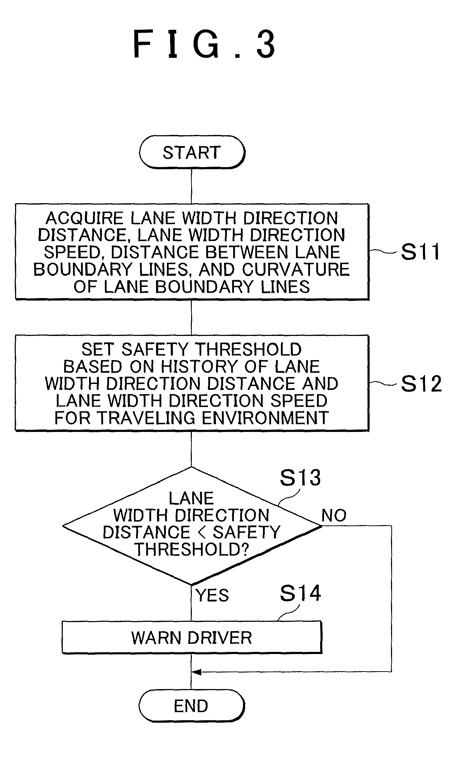

The operation of the travel support device 1 in this embodiment is described below. First, the following describes the warning operation performed in the warning mode. The travel support device 1 performs the warning operation to warn the driver of the vehicle 100 if the lane width direction distance D is smaller than the safety threshold that is set by the safety threshold setting unit 27. As shown in FIG. 3, the distance acquisition unit 21 acquires the lane width direction distance D between each of the two lane boundary lines 200 of the driving lane and the vehicle 100. The speed acquisition unit 22 acquires the lane width direction speed V of the vehicle 100 toward the lane boundary line 200. The lane width acquisition unit 23 acquires the distance between the two lane boundary lines 200. The curvature acquisition unit 24 acquires the curvature of the driving lane (S11).

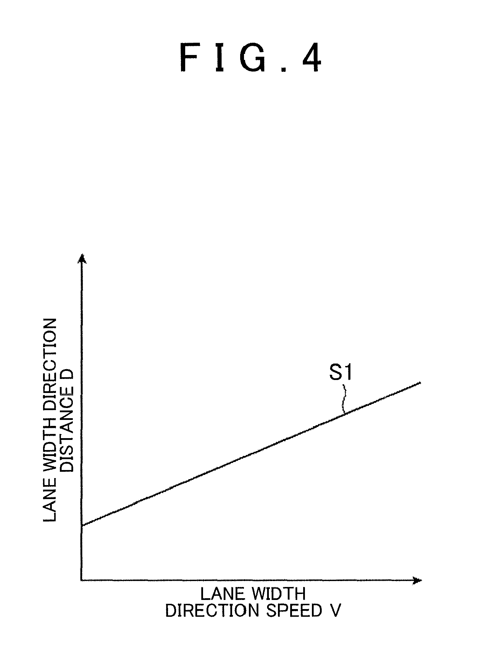

The safety threshold setting unit 27 sets a safety threshold for allowing that the lower the lane width direction speed V is toward the lane boundary line 200, the smaller the lane width direction distance D is (S12). The following describes an example of the safety threshold setting method used by the safety threshold setting unit 27. In this example, the safety threshold is calculated by expression (1) given below. According to expression (1), the safety threshold of the lane width direction distance D with respect to the lane width direction speed V is set as indicated by the straight line L1 in FIG. 4. The vertical axis of FIG. 4 is the lane width direction distance D, and the horizontal axis of FIG. 4 is the lane width direction speed V. Safety threshold = α + T × lane width direction speed V ... (1)

In expression (1), α is an arbitrary constant. In expression (1), T is a reaction time from the time the driver of the vehicle 100 receives a warning, such as a warning sound, from the warning unit 28 to the time the driver starts the avoidance operation. Therefore, if the reaction time from the time the driver receives a warning from the warning unit 28 to the time the driver starts the avoidance operation is T, the driver starts the operation, which prevents the vehicle from leaving the lane boundary line 200, after a time of T has elapsed after the driver receives the warning. According to expression (1), the higher the lane width direction speed V is, the larger the safety threshold of the lane width direction distance D is. This more surely prevents the vehicle 100 from leaving the lane boundary line 200. In addition, according to expression (1), a safety threshold is set for allowing that the lower the lane width direction speed V is toward the lane boundary line 200, the smaller the lane width direction distance D is. This prevents a warning from being output in a situation in which the lane width direction speed V is low and the vehicle 100 is less likely to leave the lane boundary line 200, reducing an unnecessary or annoying warning to the driver.

α may be set simply to 0. α may also be set to an appropriate value based on the statistical data. T may be set to a suitable value that ensures desired responsiveness. T may also be set to a value based on the statistical data about the reaction time (that is, from the time a driver receives a warning to the time the driver starts the avoidance operation) of an unspecified number of drivers.

The safety threshold of the lane width direction distance D with respect to the lane width direction speed V, defined by the straight line L1 in expression (1) given above, is set without considering the traveling environment or the differences among individual drivers. This means that the time for giving a warning to a driver may be too early or too late and, in some cases, the warning is output at a time that the driver feels that the warning is wrong. To address this problem, the safety threshold of the lane width direction distance D, defined by the straight line L1 given above, is corrected in this embodiment based on the history of the lane width direction distance D and the lane width direction speed V for the traveling environment of the vehicle 100.

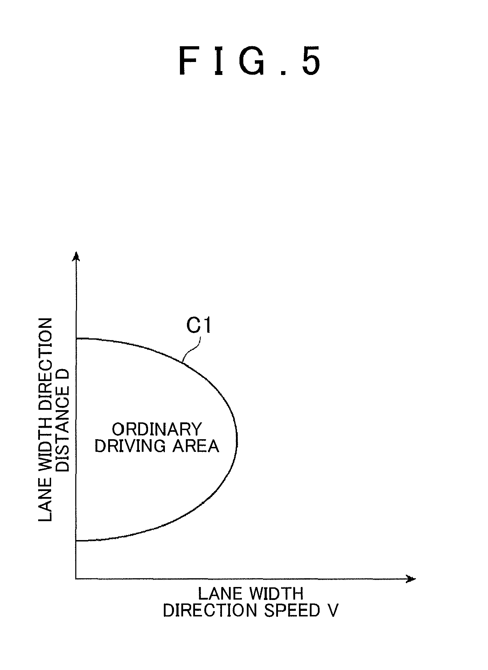

FIG. 5 is a graph showing the distribution of statistical data on the lane width direction speed V and the lane width direction distance D in the driving history of an unspecified number of drivers. The vertical axis of FIG. 5 is the lane width direction distance D, and the horizontal axis of FIG. 5 is the lane width direction speed V. The inventor and the colleagues have investigated the history of the ordinary-time driving of an unspecified number of drivers with emphasis on the lane width direction distance D and the lane width direction speed V. The investigation indicates that, when the lane width direction speed V is low, a vehicle tends to travels nearer to the lane boundary line 200 with a smaller amount of the lane width direction distance D and that, as the lane width direction speed V becomes higher, a vehicle tends to move away from the lane boundary line 200 with some amount of the lane width direction distance D. FIG. 5 shows the range, in which 99% of the driving history of an unspecified number of drivers is included, as an ordinary driving area. This area is surrounded by the curve C1. In FIG. 5, the ordinary driving area is a semi-elliptic area.

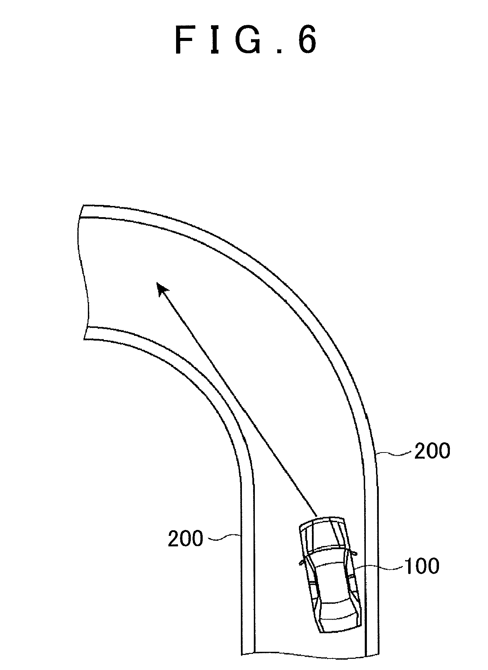

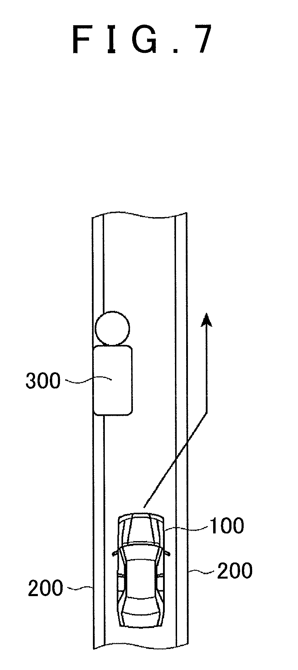

When a driver travels along a curve as shown in FIG. 6, the driver travels nearer to the lane boundary line 200 on the inner side of the curve during driving as the curvature of the driving lane is larger. In addition, as the distance between the two lane-boundary lines 200 is smaller as shown in FIG. 7, the driver tends to travel nearer to the lane boundary line 200 during driving to avoid a pedestrian 300. When the distance between the two lane-boundary lines 200 is small and there is a need to avoid a pedestrian 300, the driver sometimes drives across the lane boundary line 200 during driving.

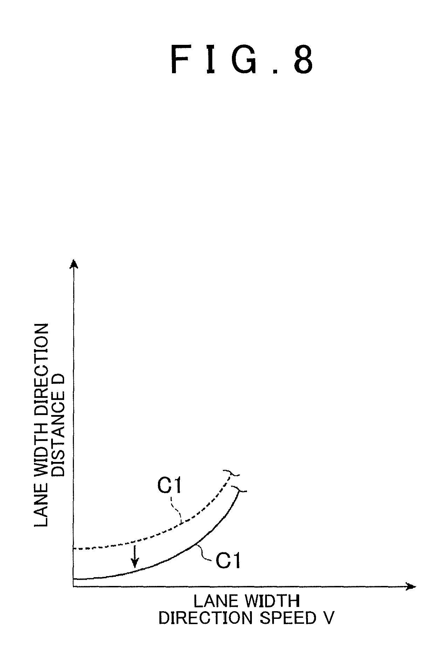

Therefore, as shown in FIG. 8, the curve C1 surrounding the ordinary driving area has a tendency that the larger the curvature of the driving lane is or the smaller the distance between the two lane boundary lines 200 is, the smaller the lane width direction distance D is with respect to the lane width direction speed V. In this way, the relation between the lane width direction speed V and lane width direction distance D depends on the traveling environment. In addition, there are differences among individual drivers in the relation between the lane width direction speed V and the lane width direction distance D. To address this problem, the travel history acquisition unit 26 in this embodiment acquires the history of the lane width direction distance D and the lane width direction speed V of the driver of the vehicle 100 recorded in the recording unit 25. In the recording unit 25, the lane width direction distance D and lane width direction speed V are recorded in association with the curvature of the driving lane and the distance between the lane boundary lines 200.

The safety threshold setting unit 27 sets the curve C1 corresponding to the curvature of the driving lane acquired by the curvature acquisition unit 24 or to the distance between the lane boundary lines 200 acquired by the lane width acquisition unit 23, using the history of the lane width direction distance D and the lane width direction speed V of the driver of the vehicle 100 acquired by the travel history acquisition unit 26. In this embodiment, to represent the degree of curve of the driving lane, the value calculated by dividing the square of the vehicle speed by the radius of curvature of the curve may be used instead of the curvature that is the reciprocal of the radius of curvature of the curve. The value calculated by dividing the square of the vehicle speed by the radius of curvature of the curve indicates the lateral acceleration generated when the vehicle 100 travels along the curve of the driving lane. The safety threshold setting unit 27 may set the curve C1 using both the curvature of the driving lane and the distance between the lane boundary lines 200.

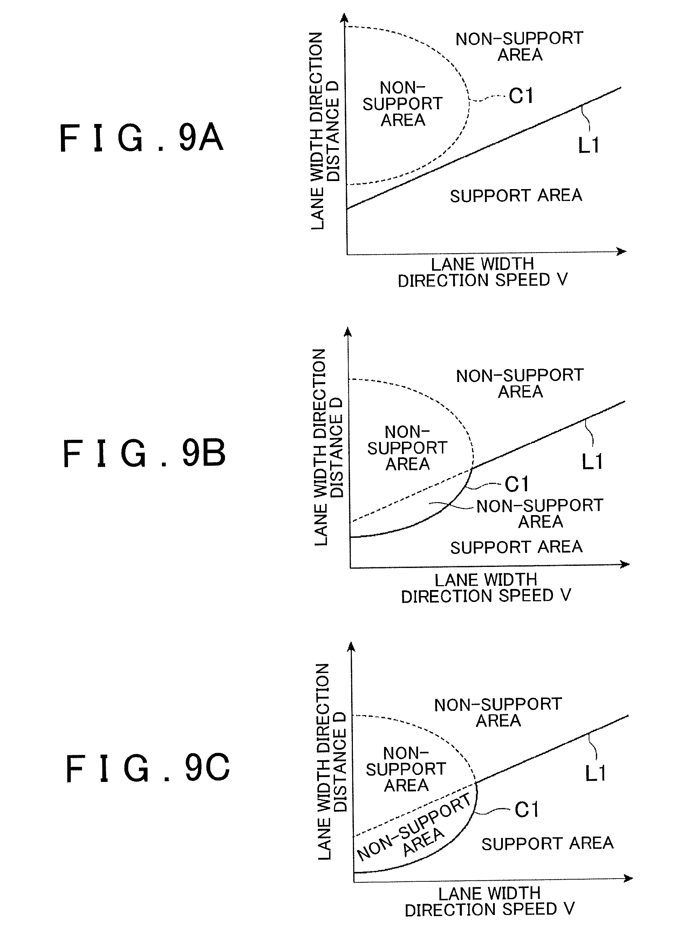

FIG. 9A to FIG. 9C are graphs showing the safety thresholds that are set using the history of the lane width direction distance between the vehicle and the lane boundary line in various traveling environments of the vehicle in the warning mode. The vertical axis of FIG. 9A to FIG. 9C is the lane width direction distance D, and the horizontal axis of FIG. 9A to FIG. 9C is the lane width direction speed V. In FIG. 9A to FIG. 9C, the straight line L1 in FIG. 4 and the curve C1 in FIG. 5 are plotted in the same figure.

As described above, the curve C1 has tendency that the smaller the distance between the two lane boundary lines 200 is, the smaller the lane width direction distance D with respect to the lane width direction speed V is. Therefore, when the distance between the lane boundary lines 200 is relatively large, the lane width direction distance D with respect to the lane width direction speed V, indicated by the curve C1, becomes relatively large as shown in FIG. 9A. On the other hand, the straight line L1 is drawn always in the same position regardless of the traveling environment, such as the curvature of the driving lane or the distance between the lane boundary lines 200, as described above. Therefore, for the same lane width direction speed V, the curve C1 is positioned on the side in which the lane width direction distance D is larger than that indicated by the straight line L1, with the result that the curve C1 and the straight line L1 do not intersect. In this case, the safety threshold setting unit 27 sets the safety threshold of the lane width direction distance D based on the straight line L1. When the driving lane is a straight lane or a gentle curve and therefore the curvature of the driving lane is a relatively small value (κ = κ₁), the safety threshold setting unit 27 sets the safety threshold of the lane width direction distance D in the similar manner.

When the distance between the lane boundary lines 200 is smaller than that in the case shown in FIG. 9A, the lane width direction distance D with respect to the lane width direction speed V, indicated by the curve C1, becomes smaller than that in the case shown in FIG. 9A as shown in FIG. 9B. On the other hand, the straight line L1 is drawn always in the same position regardless of the traveling environment as described above. Therefore, the curve C1 is positioned on the side in which the lane width direction distance D is smaller than that in the case shown in FIG. 9A, with the result that the curve C1 and the straight line L1 intersect. In this case, the safety threshold setting unit 27 sets the safety threshold of the lane width direction distance D to the smaller of the value indicated by the straight line L1 and the value indicated by the curve C1 (as indicated by bold straight line and bold curved line in the figure). When the driving lane is a sharp curve and therefore the curvature of the driving lane is larger than that of the gentle curve described above (κ = κ₂ > κ₁), the safety threshold setting unit 27 sets the safety threshold of the lane width direction distance D in the similar manner.

In addition, when the distance between the lane boundary lines 200 is smaller than that in the case shown in FIG. 9B, the lane width direction distance D with respect to the lane width direction speed V, indicated by the curve C1, becomes smaller than that in the case shown in FIG. 9B as shown in FIG. 9C. On the other hand, the straight line L1 is drawn always in the same position regardless of the traveling environment as described above. Therefore, the curve C1 is positioned on the side in which the lane width direction distance D is even smaller than that in the case shown in FIG. 9B while, at the same time, the curve C1 intersects with the straight line L1. In this case, the safety threshold setting unit 27 sets the safety threshold of the lane width direction distance D to the smaller of the value indicated by the straight line L1 and the value indicated by the curve C1 (as indicated by bold straight line and bold curved line in the figure). When the curvature of the driving lane is larger than that (κ₂) of the sharp curve described above (κ = κ₃ > κ₂), the safety threshold setting unit 27 sets the safety threshold of the lane width direction distance D in the similar manner.

When the history of the lane width direction speed V and the lane width direction distance D for the driving environment of the vehicle 100 indicates that the driver of the vehicle 100 tends to travel always in the center of the driving lane, the safety threshold setting unit 27 sets the straight line L1 and the curve C1, such as those shown in FIG. 9A, based on the history and sets the safety threshold of the lane width direction distance D based on the straight line L1. On the other hand, when the history of the lane width direction speed V and the lane width direction distance D for the driving environment of the vehicle 100 indicates that the driver of the vehicle 100 tends to travel near the lane boundary line 200, the safety threshold setting unit 27 sets the straight line L1 and the curve C1, such as those shown in FIG. 9B or FIG. 9C, based on the history and sets the safety threshold of the lane width direction distance D to the smaller of the value of the straight line L1 and the value of the curve C1.

When the vehicle 100 travels in the center of the driving lane, the lane width direction distance D is 1/2 of the distance between the two lane boundary lines 200. Therefore, the safety threshold of the lane width direction distance D is set to a value equal to or smaller than 1/2 of the distance between the two lane boundary lines 200. Therefore, the straight line L1 and the curve C1 shown in FIG. 9A to FIG. 9C are used only for the range in which the lane width direction distance D is equal to or smaller than 1/2 of the distance between the two lane boundary lines 200.

In FIG. 9A to FIG. 9C, the straight line L1 and the curve C1 delimit a support area. If the lane width direction distance D, acquired by the distance acquisition unit 21, is smaller than the safety threshold (S 13) that is the smaller of the two lane width direction distances D, one determined by the straight line L1 and the other determined by the curve C1, with respect to the lane width direction speed V acquired by the speed acquisition unit 22, the warning unit 28 warns the driver of the vehicle 100 via an image on the display 31 or a sound through the speaker 32 or via the reaction force of the steering actuator 33, brake actuator 34, or accelerator actuator 35 (S14).

On the other hand, in FIG. 9A to FIG. 9C, the straight line L1 and the curve C1 also delimit a non-support area. If the lane width direction distance D, acquired by the distance acquisition unit 21, is not smaller than the safety threshold that is the smaller of the two lane width direction distances D, one determined by the straight line L1 and the other determined by the curve C1, with respect to the lane width direction speed V acquired by the speed acquisition unit 22, the warning unit 28 does not warn the driver of the vehicle 100 even if the lane width direction distance D is smaller than the larger of the two lane width direction distances D, one determined by the straight line L1 and the other determined by the curve C1, with respect to the lane width direction speed V.

That is, in the warning mode in this embodiment, even if the lane width direction distance D is small with respect to the lane width direction speed V, a warning is not issued to the driver if the curvature of the driving lane is large or the distance between the lane boundary lines 200 is small and if the lane width direction distance D with respect to the lane width direction speed V is in the distance range in which the driver of the vehicle 100 ordinarily drives. Therefore, the warning does not give the driver a feeling that something is wrong.

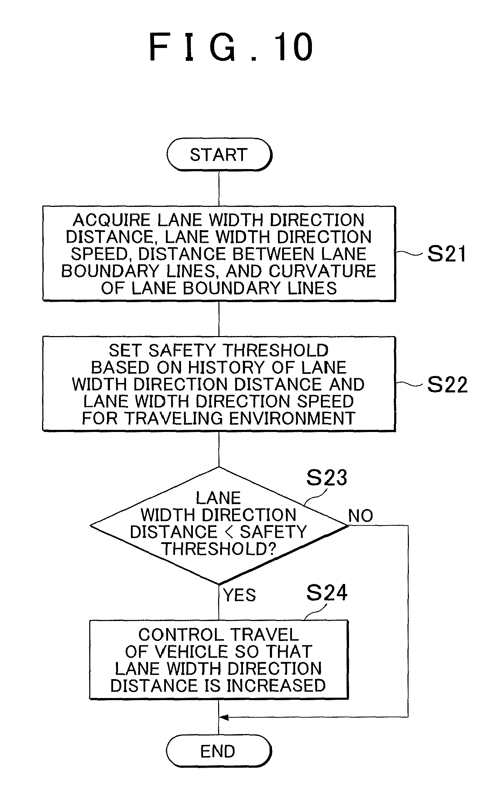

Next, the following describes the travel control operation for the vehicle 100 in the travel control mode. This operation is performed to increase the lane width direction distance D to a value equal to or larger than the safety threshold if the lane width direction distance D is smaller than the safety threshold that is set by the safety threshold setting unit 27. As shown in FIG. 10, the processing similar to that in S11 in FIG. 3 is performed first (S21). Next, from the history of the lane width direction distance D and the lane width direction speed V for the traveling environment of the vehicle 100 acquired by the travel history acquisition unit 26, the safety threshold setting unit 27 sets the safety threshold for allowing that the lower the lane width direction speed V is toward the lane boundary line 200, the smaller the lane width direction distance D is (S22).

The safety threshold is calculated, for example, by expression (2) given below. The safety threshold for the lane width direction distance D with respect to the lane width direction speed V is set by expression (2). Safety threshold = α + lane width direction speed V²/2A ....(2)

In expression (2), α is an arbitrary constant. In expression (2), A is acceleration in the direction at right angles to the lane boundary line 200 generated by the steering actuator 33, brake actuator 34, or accelerator actuator 35. According to expression (2), a larger safety threshold is set as the lane width direction speed V is higher to prevent the vehicle 100 from leaving the lane boundary line 200 more surely. As the value of A, not only the acceleration in the direction at right angles to the lane boundary line 200 generated by the steering actuator 33, brake actuator 34, or accelerator actuator 35 but also an arbitrary value may be used.

The safety threshold of the lane width direction distance D with respect to the lane width direction speed V, defined by expression (2) given above, is set without considering the traveling environment or the differences among individual drivers. This means that the time for controlling the travel of the vehicle 100 so that the lane width direction distance D is increased may be too early or too late to the driver and, in some cases, the travel control is performed at a time that the driver feels that the warning is wrong. To address this problem, the safety threshold of the lane width direction distance D with respect to the lane width direction speed V, defined by expression (2) given above, is corrected in the travel control mode as in the warning mode described above, based on the history of the lane width direction distance D and the lane width direction speed V for the traveling environment of the vehicle 100.

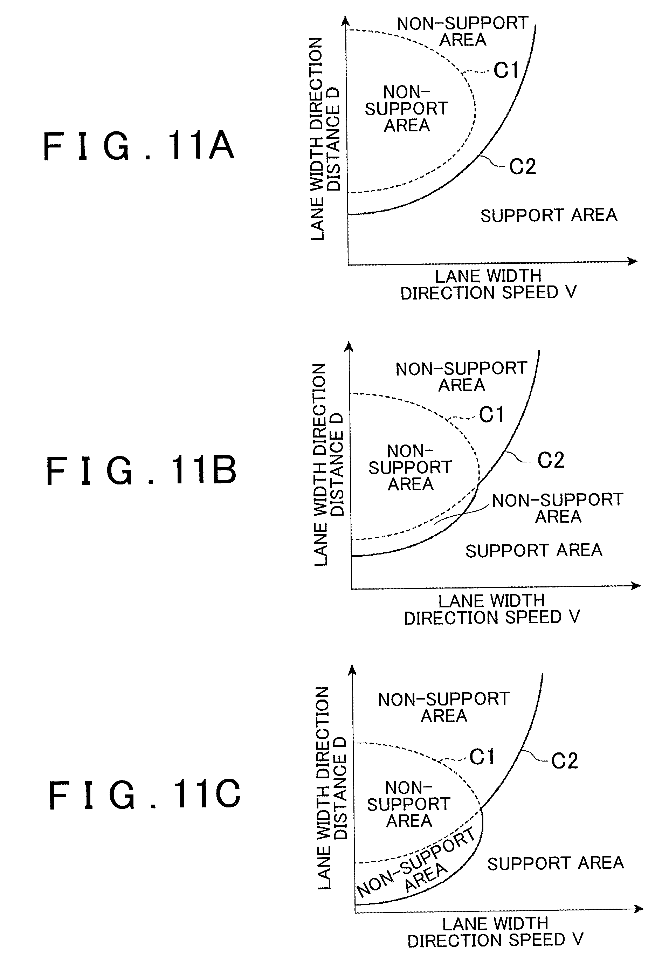

In FIG. 11A to FIG. 11C, the curve C2 that indicates expression (2) given above as well as the curve C1 is plotted. As in FIG. 9A to FIG. 9C, the vertical axis of FIG. 11A to FIG. 11C is the lane width direction distance D, and the horizontal axis of FIG. 11A to FIG. 11C is the lane width direction speed V.

As in FIG. 9A, if the distance between the lane boundary lines 200 is relatively large, the lane width direction distance D with respect to the lane width direction speed V, indicated by the curve C1, becomes relatively large as shown in FIG. 11A. On the other hand, the curve C2 is drawn always in the same position regardless of the traveling environment, such as the curvature of the driving lane or the distance between the lane boundary lines 200, as described above. Therefore, for the same lane width direction speed V, the curve C1 is positioned on the side in which the lane width direction distance D is larger than that indicated by the curve C2, with the result that the curve C 1 and the curve C2 do not intersect. In this case, the safety threshold setting unit 27 sets the safety threshold of the lane width direction distance D based on the curve C2. When the driving lane is a straight road or a gentle curve and therefore the curvature of the driving lane is relatively small (κ = κ₁), the safety threshold setting unit 27 sets the safety threshold of the lane width direction distance D in the similar manner.

When the distance between the lane boundary lines 200 is smaller than that in the case shown in FIG. 11A, the lane width direction distance D with respect to the lane width direction speed V, indicated by the curve C1, becomes smaller than that in the case shown in FIG. 11A as shown in FIG. 11B. On the other hand, the curve C2 is drawn always in the same position regardless of the traveling environment as described above. Therefore, the curve C1 is positioned on the side in which the lane width direction distance D is smaller than that in the case shown in FIG. 11A, with the result that the curve C1 and the curve C2 intersect. In this case, the safety threshold setting unit 27 sets the safety threshold of the lane width direction distance D to the smaller of the value indicated by the curve C1 and the value indicated by the curve C2 (as indicated by bold curved line in the figure). When the driving lane is a sharp curve and therefore the curvature of the driving lane is larger than that of the gentle curve described above (κ = κ₂ > κ₁), the safety threshold setting unit 27 sets the safety threshold of the lane width direction distance D in the similar manner.

In addition, when the distance between the lane boundary lines 200 is smaller than that in the case shown in FIG. 11B, the lane width direction distance D with respect to the lane width direction speed V, indicated by the curve C1, becomes smaller than that in the case shown in FIG. 11B as shown in FIG. 11C. On the other hand, the curve C2 is drawn always in the same position regardless of the traveling environment as described above. Therefore, the curve C1 is positioned on the side in which the lane width direction distance D is even smaller than that in the case shown in FIG. 11B while at the same time, the curve C1 intersects with the curve C2. In this case, the safety threshold setting unit 27 sets the safety threshold of the lane width direction distance D to the smaller of the value indicated by the curve C1 and the value indicated by the curve C2 (as indicated by bold curved line in the figure). When the curvature of the driving lane is larger than that (κ₂) of the sharp curve described above (κ = κ₃ > κ₂), the safety threshold setting unit 27 sets the safety threshold of the lane width direction distance D in the similar manner.

When the history of the lane width direction speed V and the lane width direction distance D for the driving environment of the vehicle 100 indicates that the driver of the vehicle 100 tends to drive always in the center of the driving lane, the safety threshold setting unit 27 sets the curve C1 and the curve C2, such as those shown in FIG. 11A, based on the history and sets the safety threshold of the lane width direction distance D based on the curve C2. On the other hand, when the history of the lane width direction speed V and the lane width direction distance D for the driving environment of the vehicle 100 indicates that the driver of the vehicle 100 tends to drive near the lane boundary line 200, the safety threshold setting unit 27 sets the curve C1 and the curve C2, such as those shown in FIG. 11B or FIG. 11C, based on the history and sets the safety threshold of the lane width direction distance D to the smaller of the value of the curve C 1 and the value of the curve C2. The travel control mode is similar to the warning mode in that the curve C1 and the curve C2 shown in FIG. 11A to FIG. 11C are used only for the range in which the lane width direction distance D is equal to or smaller than 1/2 of the distance between the two lane boundary lines 200.

In FIG. 11A to FIG. 11C, the curve C1 and the curve C2 delimit a support area. If the lane width direction distance D, acquired by the distance acquisition unit 21, is smaller than the safety threshold (S23) that is the smaller of the two lane width direction distances D, one determined by the curve C1 and the other determined by the curve C2, with respect to the lane width direction speed V acquired by the speed acquisition unit 22, the travel control unit 29 controls the travel of the vehicle so that the lane width direction distance D becomes equal to or larger than the safety threshold by changing the steering angle, brake amount, or acceleration amount of the vehicle 100 via the steering actuator 33, brake actuator 34, or accelerator actuator 35 (S24).

On the other hand, in FIG. 11A to FIG. 11C, the curve C1 and the curve C2 also delimit a non-support area. If the lane width direction distance D, acquired by the distance acquisition unit 21, is not smaller than the safety threshold that is the smaller of the two lane width direction distances D, one determined by the curve C1 and the other determined by the curve C2, with respect to the lane width direction speed V acquired by the speed acquisition unit 22, the travel control unit 29 does not control the travel of the vehicle 100 even if the lane width direction distance D is smaller than the larger of the two lane width direction distances D, one determined by the curve C 1 and the other determined by the curve C2, with respect to the lane width direction speed V.

That is, in the travel control mode in this embodiment, even if the lane width direction distance D is small with respect to the lane width direction speed V, the travel control of the vehicle 100 is not performed if the curvature of the driving lane is large or the distance between the lane boundary lines 200 is small and if the lane width direction distance D with respect to the lane width direction speed V is in the distance range in which the driver ordinarily drives. Therefore, the travel control, if performed, does not give the driver a feeling that something is wrong.

In the warning mode in this embodiment, the safety threshold setting unit 27 of the travel support device 1 sets a safety threshold for allowing that the lower the lane width direction speed V is toward the lane boundary line 200, the smaller the lane width direction distance D is. After that, if the lane width direction distance D is smaller than the safety threshold, the warning unit 28 warns the driver of the vehicle 100. Therefore, because a smaller lane width direction distance D is allowed for a lower lane width direction speed V, this travel support device 1 reduces annoyance to the driver. In addition, the safety threshold setting unit 27 sets a safety threshold based on the history of the lane width direction distance D and the lane width direction speed V for the traveling environment of the vehicle 100. This allows the travel support device 1 to set a safety threshold based on the driver's travel history according to the traveling environment such as a curve, thus giving a warning that reduces driver's feeling that something is wrong.

The smaller the distance between the two lane boundary lines 200 is, the nearer to the lane boundary line 200 the driver must drive during driving to avoid the pedestrian 300. To address this problem, the travel support device 1 causes the safety threshold setting unit 27 to set a smaller safety threshold as the distance between the two lane boundary lines is smaller, reducing annoyance to the driver of the vehicle 100.

The driver sometimes drives nearer to the lane boundary line on the inner side of a curve as the curvature of the driving lane is larger. To address this problem, this travel support device 1 causes the safety threshold setting unit 27 to set a smaller safety threshold as the curvature of the driving lane is larger, reducing annoyance to the driver of the vehicle 100.

In the travel control mode in this embodiment, the safety threshold setting unit 27 of the travel support device 1 sets a safety threshold for allowing that the lower the lane width direction speed V is toward the lane boundary line 200, the smaller the lane width direction distance D is. After that, the travel control unit 29 controls the travel of the vehicle 100 so that the lane width direction distance D becomes equal to or larger than the safety threshold when the lane width direction distance D is smaller than the safety threshold. Therefore, because a smaller lane width direction distance D is allowed for a lower lane width direction speed V, this travel support device 1 can reduce annoyance to the driver. In addition, the safety threshold setting unit 27 sets a safety threshold based on the history of the lane width direction distance D and the lane width direction speed V for the traveling environment of the vehicle 100. This allows the travel support device 1 to set a safety threshold based on the driver's travel history according to the traveling environment such as a curve, thus performing travel control that reduces driver's feeling that something is wrong.

It is to be understood that the warning device and the travel control device in the embodiment of the present invention are not limited to those in the embodiment described above and that various changes may, of course, be made within the scope that does not depart from the spirit of the embodiment of the present invention. For example, the warning device in the warning mode and the travel control device in the travel control mode operate separately in the embodiment above. Instead of this, the warning device and the travel control device may operate in parallel in the same device. In this case, a first safety threshold for the warning device and a second safety threshold, smaller than the first safety threshold, for the travel control device may be set. In this case, when the lane width direction distance D becomes smaller than the first safety threshold, a warning is issued. After that, when the lane width direction distance D becomes smaller than the second safety threshold, the travel control is performed.

The history of the lane width direction distance D and the lane width direction speed V for the traveling environment of the vehicle 100 may be the history associated with individual drivers of the vehicle 100. In this case, the travel support device 1, which operates as the warning device in the warning mode and as the travel control device in the travel control mode, further includes an authentication unit for authenticating each driver. In such a configuration, the safety threshold setting unit 27 can set a safety threshold based on the history of the lane width direction distance and the lane width direction speed for the traveling environment associated with each driver of the vehicle 100 who is authenticated by the authentication unit. This mode allows a safety threshold to be set for each driver, making it possible to issue a warning or to perform travel control for further reducing a driver's feeling that something is wrong.

A warning device includes a distance acquisition unit (21) that acquires a lane width direction distance between two lane boundary lines of a driving lane and a vehicle; a speed acquisition unit (22) that acquires a lane width direction speed of the vehicle toward the lane boundary lines; a safety threshold setting unit (27) that sets a safety threshold for allowing that the lower the lane width direction speed is toward the lane boundary lines, the smaller the lane width direction distance is; and a warning unit (28) that warns a driver of the vehicle when the lane width direction distance is smaller than the safety threshold, wherein the safety threshold setting unit (27) sets the safety threshold based on a history of the lane width direction distance and the lane width direction speed for a traveling environment of the vehicle.

## Claims

1. A warning device **characterized by** comprising:
a distance acquisition unit (21) that acquires a lane width direction distance between two lane boundary lines of a driving lane and a vehicle;
a speed acquisition unit (22) that acquires a lane width direction speed of the vehicle toward the lane boundary lines;
a safety threshold setting unit (27) that sets a safety threshold for allowing that the lower the lane width direction speed is toward the lane boundary lines, the smaller the lane width direction distance is; and
a warning unit (28) that warns a driver of the vehicle when the lane width direction distance is smaller than the safety threshold, wherein
the safety threshold setting unit (27) sets the safety threshold based on a history of the lane width direction distance and the lane width direction speed for a traveling environment of the vehicle.

2. The warning device according to claim 1, further comprising
a lane width acquisition unit (23) that acquires a distance between the two lane boundary lines, wherein
the safety threshold setting unit (27) sets the safety threshold that is smaller as the distance is smaller.

3. The warning device according to claim 1 or 2, further comprising a curvature acquisition unit (24) that acquires a curvature of the driving lane, wherein the safety threshold setting unit (27) sets the safety threshold that is smaller as the curvature is larger.

4. A travel control device **characterized by** comprising:
a distance acquisition unit (21) that acquires a lane width direction distance between two lane boundary lines of a driving lane and a vehicle;
a speed acquisition unit that acquires a lane width direction speed of the vehicle toward the lane boundary lines;
a safety threshold setting unit (27) that sets a safety threshold for allowing that the lower the lane width direction speed is toward the lane boundary lines, the smaller the lane width direction distance is; and
a travel control unit (29) that controls a travel of the vehicle so that the lane width direction distance becomes equal to or larger than the safety threshold when the lane width direction distance is smaller than the safety threshold, wherein
the safety threshold setting unit (27) sets the safety threshold based on a history of the lane width direction distance and the lane width direction speed for a traveling environment of the vehicle.
